(19) **Europäisches Patentamt / European Patent Office / Office européen des brevets**

(11) **EP 1 480 059 B1**

(12) **EUROPÄISCHE PATENTSCHRIFT**

(45) Veröffentlichungstag und Bekanntmachung des Hinweises auf die Patenterteilung:
**13.08.2008   Patentblatt 2008/33**

(51) Int Cl.:
*G01T 1/29* *(2006.01)*     *G03B 42/02* *(2006.01)*

(21) Anmeldenummer: **03101459.0**

(22) Anmeldetag: **21.05.2003**

(54) **Vorrichtung zum Erfassen von in einer Phosphorschicht enthaltenen Informationen**

Apparatus to readout information from a phosphor layer

Dispositif de reproduction d'image dans une couche luminescente

(84) Benannte Vertragsstaaten:
**AT BE BG CH CY CZ DE DK EE ES FI FR GB GR HU IE IT LI LU MC NL PT RO SE SI SK TR**

(43) Veröffentlichungstag der Anmeldung:
**24.11.2004   Patentblatt 2004/48**

(73) Patentinhaber: **Agfa-Gevaert HealthCare GmbH 51373 Leverkusen (DE)**

(72) Erfinder:
• **Reiser, Georg**
**80337, München (DE)**

• **Fasbender, Robert**
**85521, Ottobrunn (DE)**
• **Niang, Magath**
**81243, München (DE)**

(56) Entgegenhaltungen:
**US-A- 5 455 428        US-A1- 2002 036 277**

• **PATENT ABSTRACTS OF JAPAN vol. 2002, no. 08, 5. August 2002 (2002-08-05) -& JP 2002 107848 A (FUJI PHOTO FILM CO LTD), 10. April 2002 (2002-04-10)**

**Beschreibung**

Die Erfindung betrifft eine Vorrichtung zum Erfassen von in einer Phosphorschicht enthaltenen Informationen gemäß dem Oberbegriff des Anspruchs 1 oder 3.

Gattungsgemäße Vorrichtungen werden, insbesondere für medizinische Zwecke, im Bereich der Computer-Radiographie (CR) eingesetzt. Dabei werden Röntgenaufnahmen in einer Phosphorschicht aufgezeichnet, wobei die durch ein Objekt, beispielsweise einen Patienten, hindurchtretende Röntgenstrahlung als latentes Bild in der Phosphorschicht gespeichert wird. Zum Auslesen des latenten Bildes wird die Phosphorschicht mit Stimulationslicht bestrahlt, wodurch diese entsprechend dem latenten Bild Emissionslicht aussendet, welches von einem optischen Detektor erfasst und in elektrische Signale umgewandelt wird. Die elektrischen Signale können nach Bedarf weiterverarbeitet und auf einem Monitor dargestellt oder an einem entsprechenden Ausgabegerät, wie z. B. einem Drucker, ausgegeben werden.

Aus dem Stand der Technik sind Vorrichtungen bekannt, bei welchen das von einer Bestrahlungseinrichtung ausgehende Stimulationslicht in einem bestimmten Winkel auf die Phosphorschicht trifft und dort in einem linienförmigen Bereich Emissionslicht anregt, welches unter einem bestimmten Winkel von einem Detektor erfasst wird. Um das gesamte in der Phosphorschicht gespeicherte latente Bild zu erfassen, werden die Bestrahlungseinrichtung und die Detektionseinrichtung relativ zur Phosphorschicht bewegt, wodurch die linienförmigen Bereiche der Phosphorschicht sukzessive angeregt und ausgelesen werden.

Je nach Wahl des Winkels, unter denen das Stimulationslicht auf die Phosphorschicht trifft bzw. unter denen das von der Phosphorschicht ausgehende Emissionslicht detektiert wird, kommt es bei den aus dem Stand der Technik bekannten Vorrichtungen in bestimmten Anwendungsfällen zu Verlusten in der Intensität des zu detektierenden Emissionslichts und/oder in der Schärfe des angeregten linienförmigen Bereichs der Phosphorschicht. Die für eine zuverlässige medizinische Diagnose erforderliche hohe Qualität der ausgelesenen Bildinformation kann in diesen Fällen nicht mehr gewährleistet werden.

Aus US 2002/0036277 A1 ist eine Vorrichtung bekannt, bei welcher die Oberfläche eines das Emissionslicht sammelnden Linsenarrays so geformt oder angeordnet ist, dass an der Phosphorschicht und nachfolgend am Linsenarray reflektierte Anteile des Stimulationslichts auf Bereiche der Phosphorschicht treffen, in welchen bereits Emissionslicht angeregt worden ist.

Es ist Aufgabe der Erfindung, eine Vorrichtung zum Erfassen von in einer Phosphorschicht enthaltenen Informationen anzugeben, bei welcher Intensitäts-und/ oder Schärfeverluste möglichst gering sind.

Diese Aufgabe wird gemäß Anspruch 1 oder 3 gelöst.

Bei den erfindungsgemäßen Vorrichtungen werden der erste Neigungswinkel, den die Bestrahlungseinrichtung mit dem Lot auf der Phosphorschicht einschließt, und der zweite Neigungswinkel, den die Detektionseinrichtung mit dem Lot auf der Phosphorschicht einschließt, derart gewählt, dass an der Phosphorschicht und nachfolgend an der Detektionseinrichtung reflektierte Anteile des Stimulationslichts auf Bereiche der Phosphorschicht treffen, in welchen bereits Emissionslicht angeregt worden ist.

Durch diese Einstellung der Neigungswinkel der Bestrahlungseinrichtung und der Detektionseinrichtung wird verhindert, dass Stimulationslicht, welches an der Phosphorschicht und anschließend an der Detektionseinrichtung reflektiert wird, auf solche Bereiche der Phosphorschicht trifft, welche noch nicht zur Aussendung von Emissionslicht angeregt worden sind. Durch eine solche vorzeitige - d. h. vor dem eigentlichen Auslesevorgang erfolgende - Anregung von Emissionslicht würde ein Teil der in diesen Bereichen gespeicherten Information vernichtet werden, was signifikante Intensitäts- und Schärfeverluste bei einem nachfolgenden Auslesen des latenten Bildes aus diesen Bereichen der Phosphorschicht zur Folge hätte. Bei der erfindungsgemäßen Vorrichtung werden diese Verluste minimiert, indem das an der Phosphorschicht reflektierte Stimulationslicht in Bereiche gelenkt wird, welche bereits ausgelesen worden sind.

Es ist außerdem vorgesehen, dass der erste Neigungswinkel der Bestrahlungseinrichtung und der zweite Neigungswinkel der Detektionseinrichtung unter Berücksichtigung eines ersten Aperturwinkels der Bestrahlungseinrichtung derart gewählt sind, dass die innerhalb des ersten Aperturwinkels der Bestrahlungseinrichtung auf die Phosphorschicht treffenden, an der Phosphorschicht und nachfolgend an der Detektionseinrichtung reflektierten Anteile des Stimulationslichts auf Bereiche der Phosphorschicht treffen, in welchen bereits Emissionslicht angeregt worden ist. Mit dem ersten Aperturwinkel wird die Konvergenz oder Divergenz eines von der Bestrahlungseinrichtung ausgehenden und auf die Phosphorschicht treffenden Strahlenbündels berücksichtigt. Dadurch wird eine unerwünschte vorzeitige Stimulation der Phosphorschicht zuverlässig verhindert, wodurch Intensitäts- und Schärfeverluste besonders niedrig gehalten werden können.

In einer ersten Alternative der Erfindung gemäß Anspruch 1 ist vorgesehen, dass die Bestrahlungseinrichtung bezüglich einer Transportrichtung, in welcher die Vorrichtung zwischen Auslesevorgängen in einzelnen Bereichen relativ zur Phosphorschicht bewegt wird, vor der Detektionseinrichtung angeordnet ist. Die Vorrichtung wird folglich mit der Bestrahlungseinrichtung voran über die Phosphorschicht bewegt. Hierdurch wird erreicht, dass ein Großteil von in der Phosphorschicht gestreutem Stimulationslicht in eine Richtung gestreut wird, welche der Transportrichtung entgegengesetzt gerichtet ist. Die Streuung des Stimulationslichts erfolgt daher vorwiegend in Bereiche der Phosphorschicht, welche bereits zur Aussendung von Emissionslicht in vorangegangenen Auslesevorgängen angeregt worden sind. Da hierdurch nur ein geringer Anteil des in der Phosphorschicht gestreuten Stimulationslichts in noch nicht ausgelesene Bereiche gestreut wird, werden Intensitäts- und Schärfeverluste stark reduziert.

Dieses Merkmal, durch welches durch Streuung in der Phosphorschicht bedingte Intensitäts- und Schärfeverluste vermindert werden, führt in Kombination mit den oben genannten Merkmalen, durch welche durch Reflexionen an der Phosphorschicht verursachte Intensitäts- und Schärfeverluste vermindert werden, zu einer besonders hohen Bildqualität.

Bei der ersten Alternative der Erfindung ist darüber hinaus der erste Neigungswinkel der Bestrahlungseinrichtung größer oder gleich der Summe aus dem zweiten Neigungswinkel der Detektionseinrichtung und der Hälfte des ersten Aperturwinkels der Bestrahlungseinrichtung. Durch diese Bedingung können Intensitäts- und Schärfeverluste mit besonders hoher Zuverlässigkeit reduziert werden.

In einer zweiten Alternative der Erfindung gemäß Anspruch 3 ist vorgesehen, dass die Bestrahlungseinrichtung bezüglich einer Transportrichtung, in welcher die Vorrichtung zwischen Auslesevorgängen in einzelnen Bereichen relativ zur Phosphorschicht bewegt wird, nach der Detektionseinrichtung angeordnet ist und der erste Neigungswinkel der Bestrahlungseinrichtung kleiner oder gleich der Differenz aus dem zweiten Neigungswinkel der Detektionseinrichtung und der Hälfte des ersten Aperturwinkels der Bestrahlungseinrichtung ist. Bei dieser Alternative tritt zwar eine vermehrte Streuung von Stimulationslichtanteilen in Richtung von noch nicht angeregten Bereichen der Phosphorschicht auf, durch die erfindungsgemäße Einstellung des ersten und zweiten Neigungswinkels unter Berücksichtigung des ersten Aperturwinkels der Bestrahlungseinrichtung wird dennoch eine relativ hohe Intensität und Schärfe gewährleistet.

Vorzugsweise nimmt der erste Neigungswinkel der Bestrahlungseinrichtung möglichst kleine Werte an. Hierdurch wird der an der Phosphorschicht reflektierte Anteil des Stimulationslichts vermindert und gleichzeitig die Eindringtiefe des Stimulationslichts in die Phosphorschicht erhöht, was zu einer vermehrten Anregung von Emissionsstrahlung und damit zu einer höheren Intensität des abgegebenen Emissionslichts führt. Bei kleinen Neigungswinkeln der Bestrahlungseinrichtung wird darüber hinaus die Breite des angeregten linienförmigen Bereichs auf der Phosphorschicht verringert und damit eine höhere Bildschärfe in Transportrichtung der Vorrichtung gewährleistet. Vorzugsweise ist der erste Neigungswinkel der Bestrahlungseinrichtung kleiner als 40°.

In einer besonders bevorzugten Ausgestaltung der ersten Alternative der Erfindung ist der erste Neigungswinkel der Bestrahlungseinrichtung um höchstens 10° größer als die Summe aus dem zweiten Neigungswinkel der Detektionseinrichtung und der Hälfte des ersten Aperturwinkels der Bestrahlungseinrichtung. Hierdurch werden Intensitäts- und Signalverluste besonders gering gehalten.

Eine weitere Ausführungsform der Erfindung sieht vor, dass die Detektionseinrichtung einen zweiten Aperturwinkel aufweist und die Summe aus dem ersten Neigungswinkel der Bestrahlungseinrichtung und dem zweiten Neigungswinkel der Detektionseinrichtung größer oder gleich der Hälfte der Summe des ersten Aperturwinkels der Bestrahlungseinrichtung und des zweiten Aperturwinkels der Detektionseinrichtung ist. Hierdurch kann ein teilweises Abschatten des Stimulationslichts durch einzelne Komponenten der Detektionseinrichtung bzw. des zu erfassenden Emissionslichts durch einzelne Komponenten der Bestrahlungseinrichtung in zuverlässiger Weise verhindert werden. Verluste in der Intensität des zu erfassenden Emissionslichts können dadurch vermieden werden.

In einer weiteren Ausgestaltung der Erfindung ist vorgesehen, dass der zweite Neigungswinkel der Detektionseinrichtung kleiner ist als 30°. Bei Annahme einer Lambert'schen Abstrahlungscharakteristik des Emissionslichts wäre eine mit dem Cosinus des zweiten Neigungswinkels abnehmende Intensität des Emissionslichts zu erwarten. Versuche haben jedoch gezeigt, dass die Intensität des detektierten Emissionslichts innerhalb dieses Winkelbereichs überraschenderweise im Wesentlichen konstant ist, so dass hier keine oder lediglich vernachlässigbare Intensitätsverluste auftreten.

Bei einer weiteren alternativen Lösung ist die Bestrahlungseinrichtung derart ausgebildet, dass das Stimulationslicht in einem ersten Bereich, insbesondere auf einer Stimulationslichtlinie, auf die Phosphorschicht trifft und dass die Detektionseinrichtung so angeordnet oder ausgestaltet ist, dass sie das von einem zweiten Bereich der Phosphorschicht ausgehende Emissionslicht erfasst, wobei der zweite Bereich bezüglich des ersten Bereichs um einen bestimmten Abstand in Transportrichtung, in welcher die Vorrichtung relativ zur Phosphorschicht bewegt wird, versetzt ist. Im zweiten Bereich wird eine höhere Intensität des zu erfassenden Emissionslichts detektiert als im ersten Bereich, wodurch eine hohe Qualität des ausgelesenen Bildes gewährleistet wird.

Diese Lösung wird vorzugsweise mit der erfindungsgemäßen Vorrichtung, bei welcher durch Reflexionen an der Phosphorschicht verursachte Intensitäts- und Schärfeverluste vermindert werden, kombiniert, wodurch eine besonders hohe Bildqualität erreicht wird. Im Allgemeinen kann diese Lösung aber auch eine Alternative zur erfindungsgemäßen Vorrichtung darstellen, da sie unabhängig von der erfindungsgemäßen Vorrichtung bereits zu einer sehr hohen Bildqualität führt.

Die Erfindung wird nachfolgend anhand von Figuren näher beschrieben. Es zeigen:

Fig. 1    ein Ausführungsbeispiel der erfindungsgemäßen Vorrichtung;

Fig. 2    eine erste schematische Darstellung von Reflexionen des Stimulationslichts; und

Fig. 3    eine zweite schematische Darstellung von Reflexionen des Stimulationslichts.

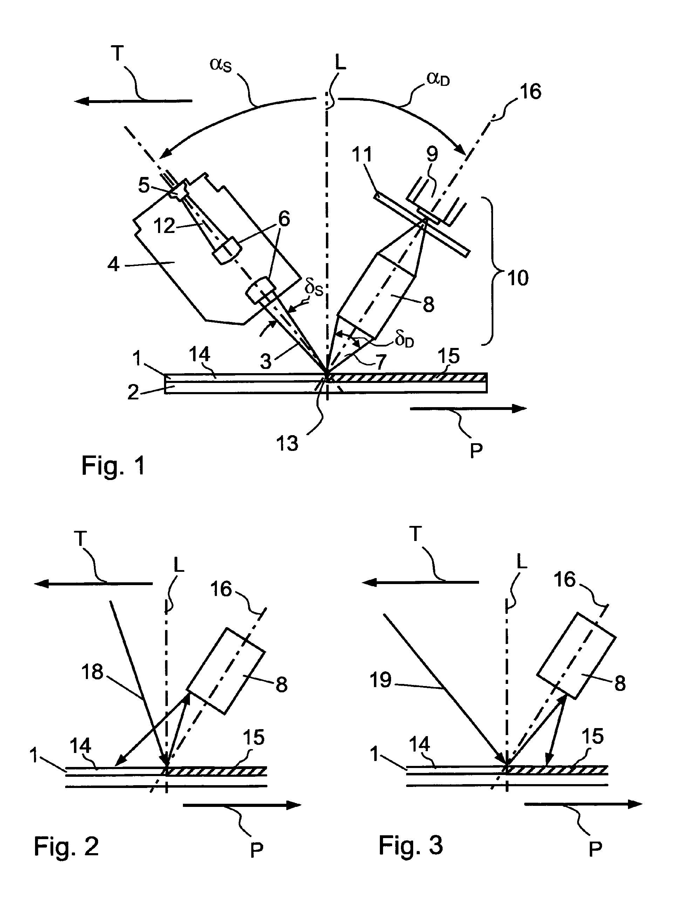

Fig. 1 zeigt ein Ausführungsbeispiel der erfindungsgemäßen Vorrichtung. Eine auszulesende Phosphorschicht 1 befindet sich auf einer Trägerschicht 2 und wird mit Stimulationslicht 3 bestrahlt, welches von einer Bestrahlungseinrichtung 4 erzeugt wird. Die Bestrahlungseinrichtung 4 weist eine Strahlungsquelle 5 sowie optische Elemente 6 auf, welche das von der Strahlungsquelle 5 ausgehende Stimulationslicht auf die Phosphorschicht 1 fokussieren.

Bei der Strahlungsquelle 5 handelt es sich vorzugsweise um mehrere in einer senkrecht zur Figurenebene verlaufenden Zeile angeordnete einzelne Lichtquellen, beispielsweise Leuchtdioden oder Laserdioden. Die optischen Elemente 6 sind vorzugsweise als zwei längliche Zylinderlinsen ausgebildet, welche im Wesentlichen parallel zu den in einer Zeile angeordneten einzelnen Lichtquellen verlaufen.

Die von den einzelnen Lichtquellen der Strahlungsquelle 5 ausgehenden divergenten Stimulationslichtbündel 12 werden durch die als Zylinderlinsen ausgebildeten optischen Elemente 6 in Figurenebene gebündelt und treffen als konvergentes Strahlungsbündel des Stimulationslichts 3 auf die Phosphorschicht 1. Senkrecht zur Figurenebene überlagern sich die divergenten Stimulationslichtbündel 12 der einzelnen Lichtquellen dabei in der Weise, dass das konvergente Strahlungsbündel des Stimulationslichts 3 eine senkrecht zur Figurenebene verlaufende, kontinuierliche Stimulationslichtlinie 13 auf der Phosphorschicht 1 beschreibt. Der Konvergenzwinkel des Strahlungsbündels des Stimulationslichts 3 entspricht hierbei im Wesentlichen dem Aperturwinkel $\delta_S$ der Bestrahlungseinrichtung 4. Die Bestrahlungseinrichtung 4 schließt mit dem Lot L auf der Phosphorschicht 1 einen ersten Neigungswinkel $\alpha_S$ ein.

Das im Bereich der Stimulationslichtlinie 13 in der Phosphorschicht 1 angeregte und abgestrahlte Emissionslicht 7 wird mit einer Detektionseinrichtung 10 erfasst. In dem gezeigten Beispiel umfasst die Detektionseinrichtung 10 einen Detektor 9 und eine optische Einrichtung 8, welche das Emissionslicht 7 auf den Detektor 9 fokussiert. Für die optische Einrichtung 8 sind beispielsweise selbstfokussierende Linsen, Mikrolinsen oder Gradientenindex-Linsen geeignet, welche jeweils in einer senkrecht zur Figurenebene verlaufenden Zeile angeordnet sind. Der Detektor 9 weist vorzugsweise eine Vielzahl von in einer Zeile senkrecht zur Figurenebene angeordneten lichtempfindlichen Detektorelementen auf und ist insbesondere als CCD-Zeile ausgebildet. Mit der beschriebenen Detektionseinrichtung 10 wird eine ortsaufgelöste Erfassung des von der angeregten Stimulationslichtlinie 13 auf der Phosphorschicht 1 ausgehenden Emissionslichts 7 erreicht.

Die Detektionseinrichtung 10 ist um einen zweiten Neigungswinkel $\alpha_D$ gegen das Lot L auf der Phosphorschicht 1 geneigt und weist einen zweiten Aperturwinkel $\delta_D$ auf.

Optional kann im Strahlengang zwischen der Phosphorschicht 1 und dem Detektor 9 ein optisches Filter 11 vorgesehen sein, welches in einem Wellenlängenbereich des Emissionslichts 7 durchlässig ist und im Wellenlängenbereich des Stimulationslichts im Wesentlichen undurchlässig ist. Hierdurch wird gewährleistet, dass die Erfassung des Emissionslichts nicht durch Anteile des Stimulationslichts verfälscht wird, welche an der Phosphorschicht 1 reflektiert werden und zum Detektor 9 gelangen können.

Vorzugsweise wird das optische Filter 11 in einem von 90° abweichenden Winkel zur optischen Achse 16 angeordnet, d.h. das optische Filter 11 wird um einige Winkelgrade gegen seine in der Fig. 1 gezeigte Stellung verkippt. Hierdurch wird verhindert, dass am optischen Filter 11 reflektiertes Emissions- und/oder Stimulationslicht 7 bzw. 3 wieder zurück auf die Phosphorschicht 1 gelangen und dort die Anregungs- und Ausleseprozesse stören kann.

In dem dargestellten Ausführungsbeispiel wird die aus der Bestrahlungseinrichtung 4 und der Detektionseinrichtung 10 bestehende Vorrichtung mit einem nicht dargestellten Transportmechanismus in Transportrichtung T über die ruhende Phosphorschicht 1 bewegt, wobei durch die Stimulationslichtlinie 13 unterschiedliche Bereiche der Phosphorschicht 1 sukzessive angeregt werden und das jeweils ausgesandte Emissionslicht 7 erfasst wird.

Vorzugsweise ist die Detektionseinrichtung 10 so angeordnet oder ausgestaltet, dass sie das von einem linienförmigen Bereich der Phosphorschicht 1 ausgehende Emissionslicht 7 erfasst, wobei der linienförmige Bereich nicht exakt mit der Stimulationslichtlinie 13 übereinstimmt, sondern um einen bestimmten Abstand in Transportrichtung T versetzt ist, d. h. vor der Stimulationslichtline 13 liegt. Die typischen Breiten der Stimulationslichtline 13 liegen im Bereich zwischen etwa 80 $\mu$m und 120 $\mu$m. Die typischen Abstände, um welche der linienförmige Bereich in Transportrichtung T versetzt wird, liegen zwischen etwa 100 $\mu$m und 150 $\mu$m. In diesem linienförmigen Bereich wird eine höhere Intensität des zu erfassenden Emissionslichts 7 detektiert als unmittelbar auf der Stimulationslichtline 13. Dieser überraschende Effekt kann mit einer Streuung von Stimulationslicht in der Phosphorschicht 1 erklärt werden, durch welche Emissionslicht nicht nur unmittelbar im Bereich der Stimulationslichtlinie 13 selbst, sondern auch in unmittelbar angrenzenden Bereichen angeregt wird. Da der entgegen der Transportrichtung T a n-grenzende Bereich bereits angeregt und ausgelesen worden ist, emittiert dieser bei erneuter Anregung nur noch wenig Emissionslicht. Dagegen gibt der in Transportrichtung T angrenzende und noch nicht ausgelesene linienförmige Bereich mehr Emissionslicht ab. Der Schwerpunkt der Intensität des ausgesandten Emissionslichts ist hierdurch bezüglich der Stimulationslichtline 13 in Transportrichtung T versetzt.

Das Stimulationslicht 3 wird bei der Anregung von Emissionslicht 7 in der Phosphorschicht 1 im Allgemeinen nicht nur absorbiert, sondern auch teilweise reflektiert. Bei dieser teilweisen Reflexion handelt es sich um keine rein spiegelnde Reflexion, sondern vielmehr um eine gerichtete Streuung des auf die Phosphorschicht 1 treffenden Stimulationslichts 3. Das an der Phosphorschicht 1 reflektierte bzw. gerichtet gestreute Stimulationslicht 3 kann dann auf die Detektionseinrichtung 10, insbesondere auf die optische Einrichtung 8, treffen und wird dort ebenfalls reflektiert. Dabei kann es vorkommen, dass das auf diese Weise reflektierte Stimulationslicht 3 auch auf Bereiche 14 der Phosphorschicht 1 trifft, welche noch nicht ausgelesen worden sind. Durch diese vorzeitige Stimulation von noch nicht ausgelesenen Bereichen 14 werden sowohl die Intensität des zu erfassenden Emissionslichts als auch die Schärfe der jeweils angeregten Stimulationslichtlinie 13 während des nachfolgenden und eigentlichen Auslesens deutlich herabgesetzt. Zur Vermeidung dieser Intensitäts- und Schärfeverluste wird erfindungsgemäß der erste Neigungswinkel $\alpha_S$ der Bestrahlungseinrichtung 4 und der zweite Neigungswinkel $\alpha_D$ der Detektionseinrichtung 10 so gewählt, dass an der Phosphorschicht 1 und an der Detektionseinrichtung 10 reflektiertes Stimulationslicht 3 auf Bereiche 15 der Phosphorschicht 1 trifft, in welchen bereits Emissionslicht 7 angeregt worden ist. Intensitäts- und Schärfeverluste aufgrund vorzeitiger Stimulation werden hierdurch stark vermindert.

Erfindungsgemäß wird bei der Wahl des ersten und zweiten Neigungswinkels $\alpha_S$ bzw. $\alpha_D$ der Aperturwinkel $\delta_S$ der Bestrahlungseinrichtung 4 berücksichtigt. Wie praktische Versuche gezeigt haben, führt die Berücksichtigung selbst kleinster Aperturwinkel $\delta_S$ der Bestrahlungseinrichtung 4 zu überraschend großen Intensitäts- und Schärfegewinnen im Vergleich zu Winkelstellungen, bei denen der Aperturwinkel $\delta_S$ der Bestrahlungseinrichtung nicht berücksichtigt wird. Es wird daher vermutet, dass selbst kleinere Abweichungen der auf die Phosphorschicht 1 treffenden Stimulationslichtstrahlen 3 vom ersten Neigungswinkel $\alpha_S$ zu unerwartet großen Intensitäts- und Schärfeverlusten aufgrund vorzeitiger Stimulation von noch nicht ausgelesenen Bereichen 14 der Phosphorplatte 1 führen können.

Eine besonders zuverlässige Reduktion von Intensitäts- und Schärfeverlusten wird in dem dargestellten Ausführungsbeispiel dadurch erreicht, dass der erste Neigungswinkel $\alpha_S$ der Bestrahlungseinrichtung 4 größer oder gleich ist der Summe aus dem zweiten Neigungswinkel $\alpha_D$ der Detektionseinrichtung 10 und der Hälfte des ersten Aperturwinkels $\delta_S$ der Bestrahlungseinrichtung 4.

Zur Veranschaulichung der Reflexionsprozesse zeigen die Figuren 2 und 3 jeweils eine schematische Darstellung der Reflexionen von Stimulationslichtstrahlen 18 bzw. 19 an der Phosphorschicht 1 sowie an der optischen Einrichtung 8 der Detektionseinrichtung. Wie in dem in Figur 1 dargestellten Ausführungsbeispiel wird bei den hier gewählten Beispielen die Bestrahlungseinrichtung zusammen mit der Detektionseinrichtung in Transportrichtung T relativ zur Phosphorschicht 1 bewegt.

Bei dem in Figur 2 gezeigten Beispiel trifft ein Lichtstrahl 18 des Stimulationslichts auf die Phosphorschicht 1 auf und wird an dieser teilweise reflektiert. Der reflektierte Anteil des Strahls trifft auf die optische Einrichtung 8 der Detektionseinrichtung, wird an dieser ebenfalls reflektiert und trifft schließlich auf Bereiche 14 der Phosphorschicht 1, in welchen noch kein Emissionslicht angeregt worden ist, d. h. welche noch nicht ausgelesen worden sind. Die in den Bereichen 14 vorzeitig angeregte Stimulation ist unerwünscht, da sie zu Intensitäts- und Schärfeverlusten führt.

Bei dem in Figur 3 gezeigten Beispiel dagegen trifft ein Lichtstrahl 19 des Stimulationslichts in einem flacheren Winkel auf die Phosphorschicht 1 und wird an dieser sowie an der ebenen Stirnfläche der optischen Einrichtung 8 der Detektionseinrichtung 10 derart reflektiert, dass er schließlich auf Bereiche 15 der Phosphorschicht 1 trifft, welche bereits ausgelesen worden sind. Die Lichtstrahlen 19 werden dabei in den - bezogen auf das Lot L - detektorseitigen Halbraum reflektiert.

Wie bei dem in Figur 1 gezeigten Ausführungsbeispiel sind bei dem in Figur 3 dargestellten Beispiel die ersten und zweiten Neigungswinkel $\alpha_S$ bzw. $\alpha_D$ so gewählt, dass alle innerhalb des Aperturwinkels $\delta_S$ der Bestrahlungseinrichtung 4 auf die Phosphorschicht 1 treffenden Lichtstrahlen 19 an der Stirnseite der optischen Einrichtung 8 derart reflektiert werden, dass diese ausschließlich auf bereits ausgelesene Bereiche 15 der Phosphorschicht 1 treffen. Intensitäts- und Schärfeverluste durch vorzeitige Stimulation aufgrund reflektierter Stimulationslichtstrahlen werden hierdurch besonders zuverlässig reduziert.

Bei den Ausführungsformen gemäß den Figuren 1 bis 3 wird die Seite der Detektionseinrichtung 10, an welcher das von der Phosphorschicht 1 reflektierte Stimulationslicht reflektiert wird, durch die ebene Stirnfläche gebildet, welche senkrecht zur optischen Achse 16 der optischen Einrichtung 8 verläuft. Die oben genannten Beziehungen für die Wahl des ersten und zweiten Neigungswinkels $\alpha_S$ bzw. $\alpha_D$ sowie des Aperturwinkels $\delta_S$ beziehen sich auf eine solche Anordnung. In Fällen, in denen die ebene Stirnfläche der Detektionseinrichtung 10 jedoch um einen bestimmten Winkelbetrag von dieser senkrechten Stellung zur optischen Achse 16 abweicht, muss dieser Winkelbetrag bei den angegebenen Beziehungen berücksichtigt werden, indem dieser je nach Richtung der Abweichung zum zweiten Neigungswinkel $\alpha_D$ addiert bzw. von diesem subtrahiert wird.

In dem in den Figuren 1 bis 3 dargestellten Ausführungen ist die Bestrahlungseinrichtung 4 bezüglich der Transportrichtung T vor der Detektionseinrichtung 10 angeordnet, d. h. die Vorrichtung zum Auslesen der in der Phosphorschicht 1 enthaltenen Informationen läuft mit der Bestrahlungseinrichtung 4 voraus über die Phosphorschicht 1. Hierdurch wird erreicht, dass ein Großteil des in der Phosphorschicht 1 gestreuten Stimulationslichts 3 in Bereiche 15 gestreut wird, welche bereits ausgelesen worden sind, und ein nur kleiner Teil in noch nicht ausgelesene Bereiche 14 der Phosphorschicht 1 gestreut wird. Dadurch können Intensitäts- und Schärfeverluste aufgrund von Streuprozessen deutlich vermindert werden. In Kombination mit der Vermeidung vorzeitiger Stimulation aufgrund von Reflexionsprozessen durch entsprechende Wahl der Neigungswinkel $\alpha_S$ und $\alpha_D$, insbesondere unter Berücksichtigung des ersten Aperturwinkels $\delta_S$ der Bestrahlungseinrichtung 4, werden Intensitäts- und Schärfeverluste besonders stark reduziert.

Bei dem beschriebenen Ausführungsbeispiel werden die Bestrahlungseinrichtung 4 und die Detektionseinrichtung 10 über die Phosphorschicht 1 bewegt. Die obigen Ausführungen gelten selbstverständlich aber auch dann, wenn die Bestrahlungseinrichtung 4 und die Detektionseinrichtung 10 ortsfest sind und die auf der Trägerschicht 2 befindliche Phosphorschicht 1 in Bewegungsrichtung P relativ zu diesen transportiert wird. Dasselbe gilt für Ausgestaltungen, bei denen sowohl die Bestrahlungseinrichtung 4 und die Detektionseinrichtung 10 in Transportrichtung T als auch die auf der Trägerschicht 2 befindliche Phosphorschicht 1 in Bewegungsrichtung P bewegt werden.

Bei der erfindungsgemäßen Alternativlösung ist vorgesehen, die Bestrahlungseinrichtung 4 und die Detektionseinrichtung 10 entgegen der in Figur 1 eingezeichneten Transportrichtung T relativ zur Phosphorschicht 1 zu transportieren. Je nach Größe des ersten Neigungswinkels $\alpha_s$ und ersten Aperturwinkels $\delta_s$ der Bestrahlungseinrichtung 4 sind bei einer solchen Ausführung höhere Intensitäts- und Schärfeverluste aufgrund von Streuprozessen in der Phosphorschicht 1 hinzunehmen. Um jedoch in diesem Fall zumindest die Intensitäts- und Schärfeverluste aufgrund von Reflexionen besonders niedrig zu halten, wird der erste Neigungswinkel $\alpha_S$ der Bestrahlungseinrichtung 4 so gewählt, dass dieser kleiner oder gleich der Differenz aus dem zweiten Neigungswinkel $\alpha_D$ der Detektionseinrichtung 10 und der Hälfte des ersten Aperturwinkels $\delta_S$ der Bestrahlungseinrichtung 4 ist.

In einer weiteren bevorzugten Ausgestaltung der Erfindung ist vorgesehen, dass der erste Neigungswinkel $\alpha_S$ der Bestrahlungseinrichtung 4 möglichst kleine Werte annimmt. Hierdurch wird erreicht, dass der an der Phosphorschicht 1 reflektierte Anteil des Stimulationslichts 3 gering gehalten wird und damit unerwünschte Effekte aufgrund vorzeitiger Stimulation von noch nicht ausgelesenen Bereichen 14 der Phosphorschicht 1 zusätzlich vermindert werden. Gleichzeitig führen kleine erste Neigungswinkel $\alpha_S$ auch dazu, dass ein größerer Anteil des Stimulationslichts 3 tiefer in die Phosphorschicht 1 eindringen und dort Emissionslicht anregen kann. Hierdurch wird die Intensität des zu detektierenden Emissionslichts 7 erhöht. Darüber hinaus wird durch kleine erste Neigungswinkel $\alpha_S$ die Breite der angeregten Stimulationslichtlinie 13 auf der Phosphorschicht 1 gering gehalten, wodurch eine hohe Bildschärfe gewährleistet wird. Nicht zuletzt wird durch möglichst kleine erste Neigungswinkel $\alpha_S$ auch das Ausmaß der Streuung von Stimulationslicht 3 in der Phosphorschicht 1 vermindert, so dass Intensitäts- und insbesondere Schärfeverluste aufgrund Streuprozessen in der Phosphorschicht 1 red u-ziert werden. Jeder einzelne dieser durch kleine erste Neigungswinkel $\alpha_S$ erzielte Effekt trägt zur Erhöhung der Qualität des ausgelesenen Bildes bei.

In dem in Figur 1 dargestellten Ausführungsbeispiel ist der erste Neigungswinkel $\alpha_S$ der Bestrahlungseinrichtung 4 vorzugsweise um höchstens 10° größer als die Summe aus dem zweiten Neigungswinkel $\alpha_D$ der Detektionseinrichtung 10 und der Hälfte des ersten Aperturwinkels $\delta_S$ der Bestrahlungseinrichtung 4. Hierdurch wird die erfindungsgemäße Verminderung von Intensitäts- und Schärfeverlusten aufgrund von Reflexionen mit den genannten Vorteilen eines kleinen ersten Neigungswinkels $\alpha_s$ der Bestrahlungseinrichtung kombiniert. Intensitäts- und Schärfevertuste werden auf diese Weise besonders stark reduziert.

Zur Vermeidung von Abschattungen des Stimulationslichts 3 durch Komponenten der Detektionseinrichtung 10 bzw. des Emissionslichts 7 durch Komponenten der Bestrahlungseinrichtung 4 ist vorgesehen, dass die Summe aus dem ersten Neigungswinkel $\alpha_S$ der Bestrahlungseinrichtung 4 und dem zweiten Neigungswinkel $\alpha_D$ der Detektionseinrichtung 10 größer oder gleich ist der Hälfte der Summe des ersten Aperturwinkels $\delta_S$ der Bestrahlungseinrichtung 4 und des zweiten Aperturwinkels $\delta_D$ der Detektionseinrichtung 10. Der zweite Neigungswinkel $\alpha_D$ der Detektionseinrichtung 10 ist hierbei vorzugsweise kleiner als 30°, um Intensitätsverluste des zu detektierenden Emissionslichts 7 möglichst gering zu halten.

Zusammenfassend werden bei dem in Figur 1 beschriebenen Ausführungsbeispiel etwaige Intensitäts- und/oder Schärfeverluste minimiert und die Qualität der erfassten Bildinformation dadurch verbessert, dass der erste Neigungswinkel $\alpha_S$, zweite Neigungswinkel $\alpha_D$, erste Aperturwinkel $\delta_S$ bzw. zweite Aperturwinkel $\delta_D$ mindestens eine der folgenden Bedingungen, insbesondere alle folgenden Bedingungen, erfüllen:

i) $\alpha_S \geq \alpha_D + \delta_S/2$

ii) $\alpha_S$ möglichst klein, insbesondere $\alpha_S \leq \alpha_D + \delta_S/2 + 10°$

iii) $\alpha_S + \alpha_D \geq (\delta_S + \delta_D)/2$

iv) $\alpha_D \leq 30°$.

Im dargestellten Beispiel der Figur 1 ist die optische Einrichtung 8 symmetrisch aufgebaut, wobei deren optische Achse 16 durch die Mitte des zweiten Aperturwinkels $\delta_D$ verläuft. Entsprechendes gilt für die Bestrahlungseinrichtung 4, deren optische Achse durch die Mitte des ersten Aperturwinkels $\delta_S$ verläuft. Prinzipiell ist es aber auch möglich, die optische Einrichtung 8 und/oder die Bestrahlungseinrichtung 4 unsymmetrisch auszugestalten, so dass deren optische Achse den zweiten Aperturwinkel $\delta_D$ bzw. den ersten Aperturwinkel $\delta_S$ jeweils in zwei unterschiedlich große Teilwinkel $\delta_{D1}$ und $\delta_{D2}$ bzw. $\delta_{S1}$ und $\delta_{S2}$ teilt. Bei diesen Ausführungsformen gelten die obigen Ausführungen sowie die Beziehungen i) bis iv) entsprechend, wobei anstelle des halben zweiten bzw. ersten Aperturwinkels $\delta_D/2$ bzw. $\delta_S/2$ der jeweilige Teilwinkel $\delta_{D1}$ oder $\delta_{D2}$ bzw. $\delta_{S1}$ oder $\delta_{S2}$ einzusetzen ist.

**Patentansprüche**

1. Vorrichtung zum Erfassen von in einer Phosphorschicht enthaltenen Informationen mit

   - einer Bestrahlungseinrichtung (4), die einen ersten Aperturwinkel ($\delta_S$) offenbart, zur Bestrahlung der Phosphorschicht (1) mit Stimulationslicht (3), welches zur Anregung von Emissionslicht (7) in der Phosphorschicht (1) geeignet ist, wobei die Bestrahlungseinrichtung (4) einen ersten Neigungswinkel ($\alpha_S$) mit dem Lot (L) auf der Phosphorschicht (1) einschließt, und
   - einer Detektionseinrichtung (10) zum Erfassen von in der Phosphorschicht (1) angeregtem Emissionslicht (7), wobei die Detektionseinrichtung (10) einen zweiten Neigungswinkel ($\alpha_D$) mit dem Lot (L) auf der Phosphorschicht (1) einschließt,

   wobei der erste Neigungswinkel ($\alpha_S$) der Bestrahlungseinrichtung (4) und der zweite Neigungswinkel ($\alpha_D$) der Detektionseinrichtung (10) derart gewählt sind, dass an der Phosphorschicht (1) und nachfolgend an der Detektionseinrichtung (10) reflektierte Anteile des Stimulationslichts (3) auf Bereiche (15) der Phosphorschicht (1) treffen, in welchen bereits Emissionslicht (7) angeregt worden ist, **dadurch gekennzeichnet, dass** die Bestrahlungseinrichtung (4) bezüglich einer Transportrichtung (T), in welcher die Vorrichtung (4, 10) relativ zur Phosphorschicht (1) bewegt wird, vor der Detektionseinrichtung (10) angeordnet ist und der erste Neigungswinkel ($\alpha_S$) der Bestrahlungseinrichtung (4) größer oder gleich der Summe aus dem zweiten Neigungswinkel ($\alpha_D$) der Detektionseinrichtung (10) und der Hälfte des ersten Aperturwinkels ($\delta_S$) der Bestrahlungseinrichtung (4) ist:

$$\alpha_S \geq \alpha_D + \delta_S/2.$$

2. Vorrichtung nach Anspruch 1, **dadurch gekennzeichnet, dass** der erste Neigungswinkel ($\alpha_S$) der Bestrahlungseinrichtung (4) um höchstens 10° größer als die Summe ($\alpha_D + \delta_S/2$) aus dem zweiten Neigungswinkel ($\alpha_D$) der Detektionseinrichtung (10) und der Hälfte des ersten Aperturwinkels ($\delta_S$) der Bestrahlungseinrichtung (4) ist.

3. Vorrichtung zum Erfassen von in einer Phosphorschicht enthaltenen Informationen mit

   - einer Bestrahlungseinrichtung (4), die einen ersten Aperturwinkel ($\delta_S$) offenbart, zur Bestrahlung der Phosphorschicht (1) mit Stimulationslicht (3), welches zur Anregung von Emissionslicht (7) in der Phosphorschicht (1) geeignet ist, wobei die Bestrahlungseinrichtung (4) einen ersten Neigungswinkel ($\alpha_S$) mit dem Lot (L) auf der Phosphorschicht (1) einschließt, und
   - einer Detektionseinrichtung (10) zum Erfassen von in der Phosphorschicht (1) angeregtem Emissionslicht (7), wobei die Detektionseinrichtung (10) einen zweiten Neigungswinkel ($\alpha_D$) mit dem Lot (L) auf der Phosphorschicht (1) einschließt,

   wobei der erste Neigungswinkel ($\alpha_S$) der Bestrahlungseinrichtung (4) und der zweite Neigungswinkel ($\alpha_D$) der Detektionseinrichtung (10) derart gewählt sind, dass an der Phosphorschicht (1) und nachfolgend an der Detektionseinrichtung (10) reflektierte Anteile des Stimulationslichts (3) auf Bereiche (15) der Phosphorschicht (1) treffen, in welchen bereits Emissionslicht (7) angeregt worden ist, **dadurch gekennzeichnet, dass** die Bestrahlungseinrichtung (4) bezüglich einer Transportrichtung (T), in welcher die Vorrichtung (4, 10) relativ zur Phosphorschicht (1) bewegt wird, nach der Detektionseinrichtung (10) angeordnet ist und der erste Neigungswinkel ($\alpha_S$) der Bestrahlungseinrichtung (4) kleiner oder gleich der Differenz aus dem zweiten Neigungswinkel ($\alpha_D$) der Detektionseinrichtung (10) und der Hälfte des ersten Aperturwinkels ($\delta_S$) der Bestrahlungseinrichtung (4) ist:

$$\alpha_S \leq \alpha_D - \delta_S/2.$$

4. Vorrichtung nach einem der vorangehenden Ansprüche, **dadurch gekennzeichnet, dass** der erste Neigungswinkel ($\alpha_S$) der Bestrahlungseinrichtung (4) möglichst klein ist.

**5.** Vorrichtung nach einem der vorangehenden Ansprüche, **dadurch gekennzeichnet, dass** die Detektionseinrichtung (10) einen zweiten Aperturwinkel ($\delta_D$) aufweist und die Summe aus dem ersten Neigungswinkel ($\alpha_S$) der Bestrahlungseinrichtung (4) und dem zweiten Neigungswinkel ($\alpha_D$) der Detektionseinrichtung (10) größer oder gleich der Hälfte der Summe des ersten Aperturwinkels ($\delta_S$) der Bestrahlungseinrichtung (4) und des zweiten Aperturwinkels ($\delta_D$) der Detektionseinrichtung (10) ist:

$$\alpha_S + \alpha_D \geq (\delta_S + \delta_D)/2.$$

**6.** Vorrichtung nach einem der Ansprüche 1 bis 4, **dadurch gekennzeichnet, dass** der zweite Neigungswinkel ($\alpha_D$) der Detektionseinrichtung (4) kleiner ist als 30°.

**7.** Vorrichtung nach einem der vorangehenden Ansprüche, wobei

- die Bestrahlungseinrichtung (4) derart ausgebildet ist, dass das Stimulationslicht (3) in einem ersten Bereich, insbesondere auf einer Stimulationslichtlinie (13), auf die Phosphorschicht (1) trifft und
- die Detektionseinrichtung (10) so angeordnet oder ausgestaltet ist, dass sie das von einem zweiten Bereich der Phosphorschicht (1) ausgehende Emissionslicht (7) erfasst, wobei der zweite Bereich bezüglich des ersten Bereichs um einen bestimmten Abstand in Transportrichtung T, in welcher die Vorrichtung relativ zur Phosphorschicht (1) bewegt wird, versetzt ist.

**Claims**

**1.** An apparatus for collecting information contained in a phosphor layer with

- an irradiation device (4) which exhibits a first aperture angle ($\delta_S$) for irradiating the phosphor layer (1) with stimulation light (3) which is suitable for stimulating emission light (7) in the phosphor layer (1), the irradiation device (4) enclosing a first angle of inclination ($\alpha_S$) with the perpendicular (L) on the phosphor layer (1), and
- a detection device (10) for collecting emission light (7) stimulated in the phosphor layer (1), the detection device (10) enclosing a second angle of inclination ($\alpha_D$) with the perpendicular (L) on the phosphor layer (1),

the first angle of inclination ($\alpha_S$) of the irradiation device (4) and the second angle of inclination ($\alpha_D$) of the detection device being chosen such that portions of the stimulation light (3) reflected on the phosphor layer (1) and subsequently on the detection device (10) hit regions (15) of the phosphor layer (1) in which emission light (7) has already been stimulated, **characterised in that** the irradiation device (4) is disposed before the detection device (10) in relation to a conveyance direction (T) in which the apparatus (4, 10) is moved relative to the phosphor layer (1), and the first angle of inclination ($\alpha_S$) of the irradiation device (4) is greater than or equal to the sum of the second angle of inclination ($\alpha_D$) of the detection device (10) and half of the first aperture angle ($\delta_S$) of the irradiation device:

$$\alpha_s \geq \alpha_D + \delta_s/2.$$

**2.** The apparatus according to Claim 1, **characterised in that** the first angle of inclination ($\alpha_S$) of the irradiation device (4) is maximum 10° greater than the sum ($\alpha_D + \delta_S/2$) of the second angle of inclination ($\alpha_D$) of the detection device (10) and half of the first aperture angle ($\delta_S$) of the irradiation device (4).

**3.** An apparatus for collecting information contained in a phosphor layer with

- an irradiation device (4) which exhibits a first aperture angle ($\delta_s$) for irradiating the phosphor layer (1) with stimulation light (3) which is suitable for stimulating emission light (7) in the phosphor layer (1), the irradiation device (4) enclosing a first angle of inclination ($\alpha_s$) with the perpendicular (L) on the phosphor layer (1), and
- a detection device (10) for collecting emission light (7) stimulated in the phosphor layer (1), the detection device enclosing a second angle of inclination ($\alpha_D$) with the perpendicular (L) on the phosphor layer (1),

the first angle of inclination ($\alpha_S$) of the irradiation device (4) and the second angle of inclination ($\alpha_D$) of the detection device (10) being chosen such that portions of the stimulation light (3) reflected on the phosphor layer (1) and subsequently on the detection device (10) hit regions (15) of the phosphor layer (1) in which emission light (7) has already been stimulated, **characterised in that** the irradiation device (4) is disposed after the detection device (10) in relation to a conveyance direction (T) in which the apparatus (4, 10) is moved relative to the phosphor layer (1), and the first angle of inclination ($\alpha_S$) of the irradiation device (4) is smaller than or equal to the difference between the second angle of inclination ($\alpha_D$) of the detection device (10) and half of the first aperture angle ($\delta_s$) of the irradiation device (4):

$$\alpha_s \leq \alpha_D - \delta_s/2.$$

4. The apparatus according to any of the preceding claims, **characterised in that** the first angle of inclination ($\alpha_s$) of the irradiation device (4) is as small as possible.

5. The apparatus according to any of the preceding claims, **characterised in that** the detection device (10) has a second aperture angle ($\delta_D$) and the sum of the first angle of inclination ($\delta_s$) of the irradiation device (4) and the second angle of inclination ($\alpha_D$) of the detection device (10) is greater than or equal to half the sum of the first aperture angle ($\delta_s$) of the irradiation device (4) and of the second aperture angle ($\delta_D$) of the detection device (10):

$$\alpha_s + \alpha_D \geq (\delta_s + \delta_D)/2.$$

6. The apparatus according to any of Claims 1 to 4, **characterised in that** the second angle of inclination ($\alpha_D$) of the detection device (4) is smaller than 30°.

7. The apparatus according to any of the preceding claims,

 - the irradiation device (4) being designed such that the stimulation light (3) hits the phosphor layer (1) in a first region, in particular on a stimulation light line (13), and
 - the detection device (10) is disposed or designed such that it collects emission light (7) passing out of a second region of the phosphor layer (1), the second region being offset in relation to the first region by a specific distance in direction of conveyance T in which the apparatus is moved relative to the phosphor layer (1).

**Revendications**

1. Dispositif pour la saisie d'informations contenues dans une couche de phosphore comprenant

 - une unité d'irradiation (4) présentant un premier angle d'ouverture ($\delta_S$) et destinée à irradier la couche de phosphore (1) par une lumière de stimulation (3) qui est appropriée pour stimuler de la lumière d'émission (7) dans la couche de phosphore (1), l'unité d'irradiation (4) formant un premier angle d'inclinaison ($\alpha_S$) avec la perpendiculaire (L) sur la couche de phosphore (1), et
 - un dispositif de détection (10) pour détecter la lumière d'émission (7) stimulée dans la couche de phosphore (1), le dispositif de détection (10) formant un deuxième angle d'inclinaison ($\alpha_D$) avec la perpendiculaire (L) sur la couche de phosphore (1), le premier angle d'inclinaison ($\alpha_S$) de l'unité d'irradiation (4) et le deuxième angle d'inclinaison ($\alpha_D$) du dispositif de détection (10) étant choisis de sorte que des portions de lumière de stimulation (3) réfléchies par la couche de phosphore (1) puis par le dispositif de détection (10) parviennent sur des zones (15) de la couche de phosphore (1) dans lesquelles de la lumière d'émission (7) a déjà été stimulée, **caractérisé en ce que** dans un sens de transport (T) dans lequel le dispositif (4, 10) est déplacé par rapport à la couche de phosphore (1), l'unité d'irradiation (4) est disposée en amont du dispositif de détection (10) et le premier angle d'inclinaison ($\alpha_S$) de l'unité d'irradiation (4) est supérieur ou égal à la somme du deuxième angle d'inclinaison ($\alpha_D$) du dispositif de détection (10) et de la moitié du premier angle d'ouverture ($\delta_S$) de l'unité d'irradiation (4) :

$$\alpha_S \geq \alpha_D + \delta_S/2$$

2. Dispositif selon la revendication 1, **caractérisé en ce que** le premier angle d'inclinaison ($\alpha_S$) de l'unité d'irradiation (4) est au maximum de 10° supérieur à la somme ($\alpha_D + \delta_S/2$) du deuxième angle d'inclinaison ($\alpha_D$) du dispositif de détection (10) et de la moitié du premier angle d'ouverture ($\delta_S$) de l'unité d'irradiation (4).

3. Dispositif pour la saisie d'informations contenues dans une couche de phosphore comprenant

 - une unité d'irradiation (4) présentant un premier angle d'ouverture ($\delta_S$) et destinée à irradier la couche de phosphore (1) par une lumière de stimulation (3) qui est appropriée pour stimuler de la lumière d'émission (7) dans la couche de phosphore (1), l'unité d'irradiation (4) formant un premier angle d'inclinaison ($\alpha_S$) avec la perpendiculaire (L) sur la couche de phosphore (1), et
 - un dispositif de détection (10) pour détecter la lumière d'émission (7) stimulée dans la couche de phosphore (1), le dispositif de détection (10) formant un deuxième angle d'inclinaison ($\alpha_D$)

avec la perpendiculaire (L) sur la couche de phosphore (1), le premier angle d'inclinaison ($\alpha_S$) de l'unité d'irradiation (4) et le deuxième angle d'inclinaison ($\alpha_D$) du dispositif de détection (10) étant choisis de sorte que des portions de lumière de stimulation (3) réfléchies par la couche de phosphore (1) puis par le dispositif de détection (10) parviennent sur des zones (15) de la couche de phosphore (1) dans lesquelles de la lumière d'émission (7) a déjà été stimulée, **caractérisé en ce que**

dans un sens de transport (T) dans lequel le dispositif (4, 10) est déplacé par rapport à la couche de phosphore (1), l'unité d'irradiation (4) est disposée en aval du dispositif de détection (10) et le premier angle d'inclinaison ($\alpha_S$) de l'unité d'irradiation (4) est inférieur ou égal à la différence entre le deuxième angle d'inclinaison ($\alpha_D$) du dispositif de détection (10) et la moitié du premier angle d'ouverture ($\delta_s$) de l'unité d'irradiation (4) :

$$\alpha_S \leq \alpha_D + \delta_S/2$$

4. Dispositif selon l'une des revendications précédentes, **caractérisé en ce que** le premier angle d'inclinaison ($\alpha_S$) de l'unité d'irradiation (4) est aussi petit que possible.

5. Dispositif selon l'une des revendications précédentes, **caractérisé en ce que** le dispositif de détection (10) présente un deuxième angle d'ouverture ($\delta_D$) et la somme du premier angle d'inclinaison ($\alpha_S$) de l'unité d'irradiation (4) et du deuxième angle d'inclinaison ($\alpha_D$) du dispositif de détection (10) est supérieure ou égale à la moitié de la somme du premier angle d'ouverture ($\delta_S$) de l'unité d'irradiation (4) et du deuxième angle d'ouverture ($\delta_D$) du dispositif de détection (10) :

$$\alpha_S + \alpha_D \geq (\delta_S + \delta_D)/2.$$

6. Dispositif selon l'une des revendications 1 à 4, **caractérisé en ce que** le deuxième angle d'inclinaison ($\alpha_D$) du dispositif de détection (4) est inférieur à 30°.

7. Dispositif selon l'une des revendications précédentes, dans lequel

- l'unité d'irradiation (4) est conçue de sorte que la lumière de stimulation (3) située dans une première zone, notamment sur une ligne de lumière de stimulation (13), parvienne sur la couche de phosphore (1), et

- le dispositif de détection (10) est agencé ou conçu de sorte à détecter la lumière d'émission (7) émanant d'une deuxième zone de la couche de phosphore (1), la deuxième zone étant décalée par rapport à la première zone selon un certain écart dans le sens de transport T dans lequel le dispositif est déplacé par rapport à la couche de phosphore (1).

Fig. 1

Fig. 2

Fig. 3

**EP 1 480 059 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20020036277 A1